# EUROPEAN PATENT SPECIFICATION

(11) **EP 0 494 490 B1**
(45) Date of publication and mention of the grant of the patent: **17.05.1995**
(21) Application number: 91308144.4
(22) Date of filing: 05.09.1991
(51) Int. Cl.: B24B 31/16, F16H 35/14

(54) **Finishing apparatus for workpieces**
Endbearbeitungsvorrichtung für Werkstücke
Dispositif de finition pour pièces usinées

(30) Priority: 08.01.1991 GB 9100335
(43) Date of publication of application: 15.07.1992
(73) Proprietor: Hodgson, Bryan Stuart, Coventry, West Midlands CV4 9HN (GB)
(72) Inventor: Hodgson, Bryan Stuart, Coventry, West Midlands CV4 9HN (GB)
(74) Representative: Adkins, Michael

(56) References cited:
- EP-A- 0 134 779
- EP-A- 0 229 297
- EP-A- 0 400 515
- DE-A- 3 301 544

## Description

The invention relates to finishing apparatus for workpieces.

Various types of finishing machines have been proposed hitherto and the invention is particularly concerned with finishing apparatus of the vibratory type in which a mixture of workpieces and abrading media is vibrated within a finishing chamber.

In such machines, it is commonplace to separate the workpieces from the finishing media by directing the mixture to a separating screen leading off the chamber. In order to do that, the mixture may be arranged to move onto a movable member pivotally mounted on a wall of the chamber. The member is often in the form of a pivotally mounted flap which engages the top of a dam in the chamber and directs the mixture from the top of the dam onto the separating screen. Once the separating step is completed, the flap is pivoted into an inoperative position clear of the dam.

EP-A-400 515 describes such a vibrating-type finishing machine for workpieces comprising a container defining a finishing chamber for a mixture of workpieces and finishing media, a pivotable member for movement between an inoperative position and an operative position for directing the mixture from the chamber towards a surface above a floor of the chamber, and holding means for holding the pivotable member in at least its inoperative position.

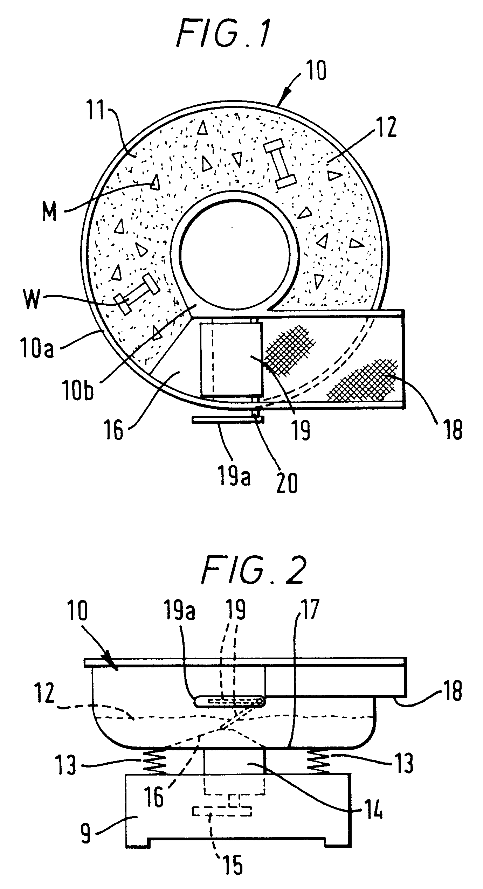

One of the problems with vibratory type finishing machines is that of holding the movable member in its inoperative position. As the chamber is vibrated, there is tendency for the member to creep down towards its operative position which is undesirable. In EP-A-O 400 515 it has been proposed to use a timer controlled motor for holding the member in its inoperative position. In addition, various other methods have been proposed for holding the member in its inoperative position and reference is made to Figs.1 to 6 of the accompanying drawings which show further prior art machines as follows:-
Fig.1 is a plan view of a typical vibratory finishing machine,
Fig.2 is an elevation of the machine shown in Fig.1,
Fig.3 is a cross-section through part of a bowl defining a finishing chamber in a machine of the type shown in Fig.1 and showing one type of arrangement for holding in its inoperative position a movable flap for directing mixture from the chamber onto a finishing screen.
Fig.4 is a cross-section on line IV - IV in Fig.3,
Fig.5 is a view of part of a finishing bowl shown broken away and having a simplified external lever arrangement in which the lever locates in a single notch in order to hold the flap in its inoperative position and
Fig.6 is a cross-section of the lever arrangement shown in Fig.5 on line VI - VI in Fig.5.

In Fig.1, the machine comprises an annular bowl 10 defining a finishing chamber 11 between outer and inner walls 10a, 10b. The chamber receives a mixture 12 of workpieces W and suitable finishing media M. The bowl 10 is carried by resilient mountings 13 on a base 9 and is vibrated by means of a motor 14 mounted beneath the bowl and carrying at least one eccentric weight 15. A dam 16 is provided on a floor 17 of the bowl and, in use, the mixture travels up one side of the dam and down the other side as it travels around the chamber 11.

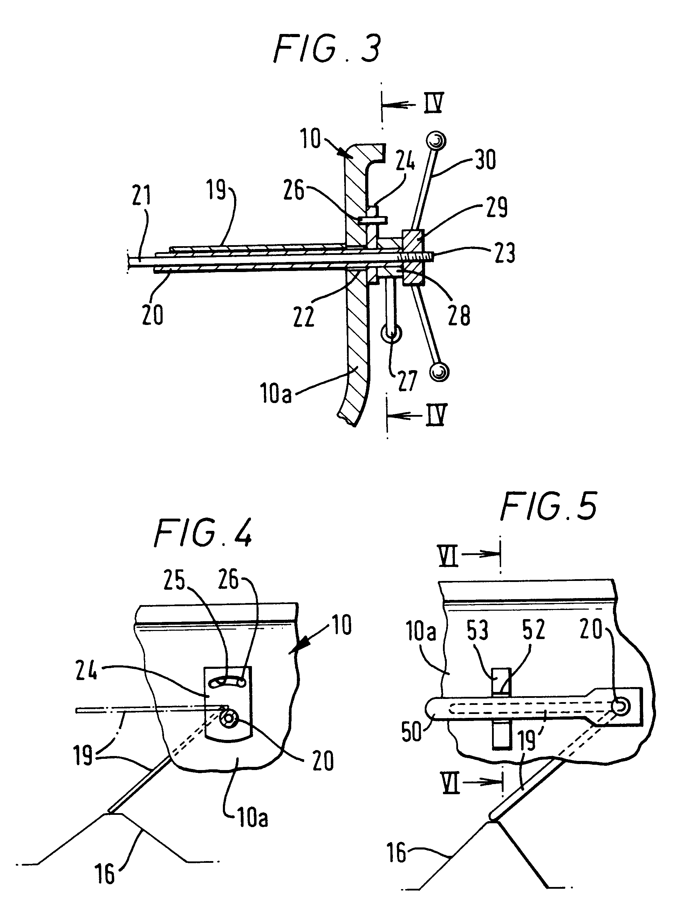

When finishing of the workpieces W is complete, it is necessary to separate the workpieces W from the finishing media M and a separating screen 18 is provided for that purpose. In order to lead the mixture from the chamber 11 on the screen 18, a pivotal flap 19 is provided on a shaft 20 movable by a handle 19a. The flap 19 is normally in the form of a rigid metal plate and two forms of flap holding arrangements will now be described with reference to Figures 3 to 6. In Figs.3 to 6, parts corresponding to parts shown in Figs.1 and 2 carry the same reference numerals.

In Figs.3 and 4, the flap 19 is attached at one end to a hollow shaft 20 which projects through an aperture 22 in an outer wall 10a of the bowl 10. A plate 24 is welded to the hollow shaft 20. The plate 24 has an arcuate slot 25 therein struck about the axis of hollow shaft 20. The slot 25 receives a peg 26 on the wall 10a. An operating lever 27 has a boss 28 welded to the plate 24. A shaft 21 extends through the hollow shaft 20 and has its left-hand end (not shown) axially fast with the inner wall 10b of the bowl 10. A screw-threaded righthand end 23 of the shaft 21 carries a screw-threaded boss 29 having handles 30.

To hold the flap 19 in its inoperative position in broken lines in Fig. 3, the boss 29 is tightened up so as to urge the hollow shaft 20 inwardly thereby clamping the plate 24 against the wall 10a. In order to move the flap into the full line position shown in Fig.3, the boss 29 is unscrewed and the lever 27 moved to turn the hollow shaft 20 and shift the flap 19. The slot 25 limits the pivotal movement of the flap 19.

With such an arrangement, it has been found that the constant and intense vibration applied to the bowl 10 can tend to have a loosening effect on the boss 29 and can eventually lead to the screw threads becoming seriously damaged. This has been a longstanding problem in the art. Various other screw holding arrangements for flaps on such machines have also been proposed hitherto and have been known for many years.

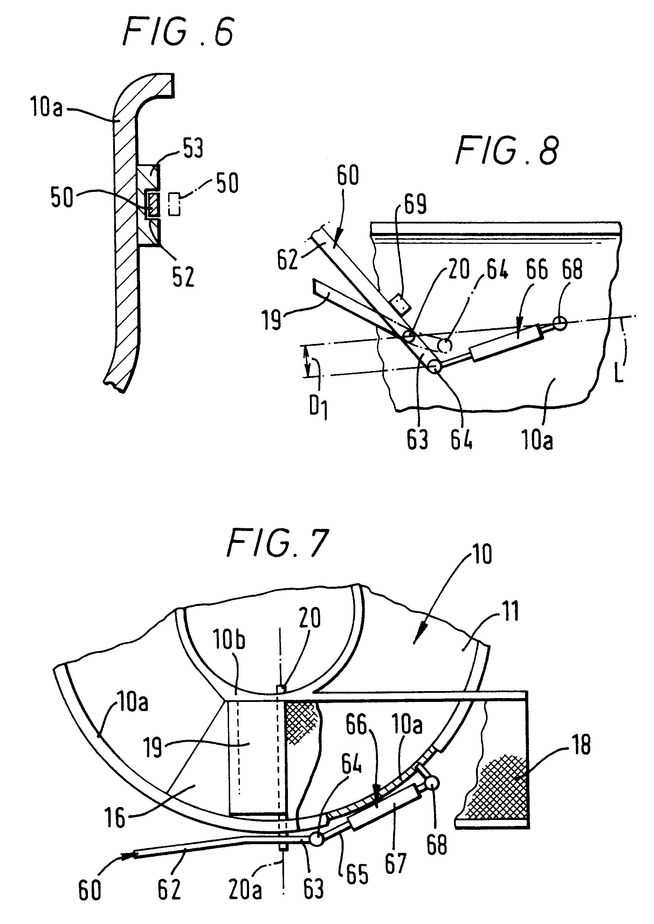

A system previously proposed by me to overcome the problems of screw threaded clamping arrangements is shown in Figs.5 and 6.

In Figs.5 and 6 a handle 50 locates in a notch 52 formed in a block 53 on the wall 10a. The hand 50 locates in the notch 52 to hold the flap 19 in its upper inoperative position and is moved outwardly to the position shown in broken lines in Fig.6 to enable it to be pivoted into its operative position. Once in the operative position, it is found that the weight of the mixture 12 is sufficient to hold the flap 19 in engagement with the upper end of the dam 16. Again the flap 19 is mounted on a shaft 20.

The arrangement shown in Figs.5 and 6 has proved satisfactory in so far as the problems associated with screw-threaded locking arrangements are avoided. However, it has been found that operators tend to pull the handle 50 out too far when changing the position of the flap. Where the handle is pulled beyond its elastic limit, it can take on permanent set at a new position so that it can no longer engage the notch 52.

An object of the present invention is to provide a much improved system for controlling the position of the flap which avoids the longstanding problems associated with screw-threaded securing arrangements and also the problem associated with my flexible handle type system shown in Figs.5 and 6.

According to the invention there is provided apparatus of a vibratory type for workpieces comprising a container defining a finishing chamber for a mixture of workpieces and finishing media, a pivotable member for movement between an inoperative position and an operative position for directing the mixture from the chamber towards a surface above a floor of the chamber, holding means in the form of a cylinder for holding the pivotable member in at least its inoperative position and a lever through which the holding means is connected to the pivotable member, characterised in that an elongate handle is provided by means of which the pivotable member can be moved manually between its operative and inoperative positions, and said holding means is a gas spring which comprises an enclosed pneumatic cylinder charged with gas such as nitrogen under pressure, whereby manual movement of the handle to change the position of the pivotal member urges a piston rod of the gas spring inwardly from an extended position to compress the gas spring, the gas spring thereafter providing through the lever a controlled movement of the piston rod back towards its extended position so as to assist movement of the pivotable member towards its new position.

By using a gas spring to hold the pivotable member in its inoperative position, the member will be retained firmly and conveniently without using screw clamping devices or resilient handle arrangements.

Preferably the gas spring is also arranged to hold the pivotable member in its operative position.

The gas spring may be arranged to provide a greater turning moment to the pivotable member when the latter occupies its inoperative position than when it occupies its operative position. In that way, the gas spring will provide ample force to prevent the movable member moving, typically, downwards under its own weight during vibration of the apparatus whereas, in the operative position, less turning moment is required as the weight of the mixture assists in holding the pivotable member in that position.

During movement of the pivotable member between its operative and inoperative positions, the gas spring is preferably arranged to pass overcentre through a dead centre position.

The gas spring is preferably mounted for pivoting on a first pivot and is connected by a second pivot to the lever to which load is applied by the gas spring during movement of the pivotable member between its operative and inoperative positions. The dead centre position preferably lies on a mean line passing through the first pivot and an axis about which the said lever rotates.

In the operative position of the pivotable member, the second pivot preferably lies at a different distance from the mean line than when the pivotable member occupies its operative position. Preferably, the second pivot lies at a greater distance from the mean line when the pivotable member occupies its inoperative position than when it occupies its operative position. In that way the gas spring will provide a greater leverage when the flap is in its inoperative position whilst requiring a relatively small amount of angular movement of the operating means before the overcentre position is reached during movement of the pivotable member back towards its inoperative position.

Preferably, the said lever includes a section to which load is applied by said gas spring and includes a second section defining the handle, the said sections being arranged on opposite sides of an axis about which the lever pivots.

The said first member may be longer than the first member by a ratio such as 5:1.

The gas spring is preferably mounted on the container.

The container may comprise a bowl, e.g., of circular or annular form. Where the bowl is circular or annular, the gas spring may lie substantially tangentially to the bowl.

I have found that a gas spring is surprisingly well suited to vibratory conditions as there are few working parts to shake loose. Moreover, it is virtually maintenance free and the required forces can be obtained from a small and compact spring which will not project obtrusively from the exterior of the container. Moreover the gas spring is smooth in operation and can provide a damped movement of the pivotable member between its operative and inoperative positions. That is a particularly useful feature as it avoids a sudden snap-action movement of the pivotable member following overcentre movement as aforesaid.

Apparatus in accordance with the invention will now be described by way of example with reference to the remaining accompanying drawings in which:-
Fig.7 is a plan view of part of a finishing bowl of a vibratory finishing apparatus incorporating a mechanism for holding the flap in a desired position in accordance with the invention,
Fig.8 is an elevation of part of the bowl shown in Fig.7 showing the flap in its inoperative position,

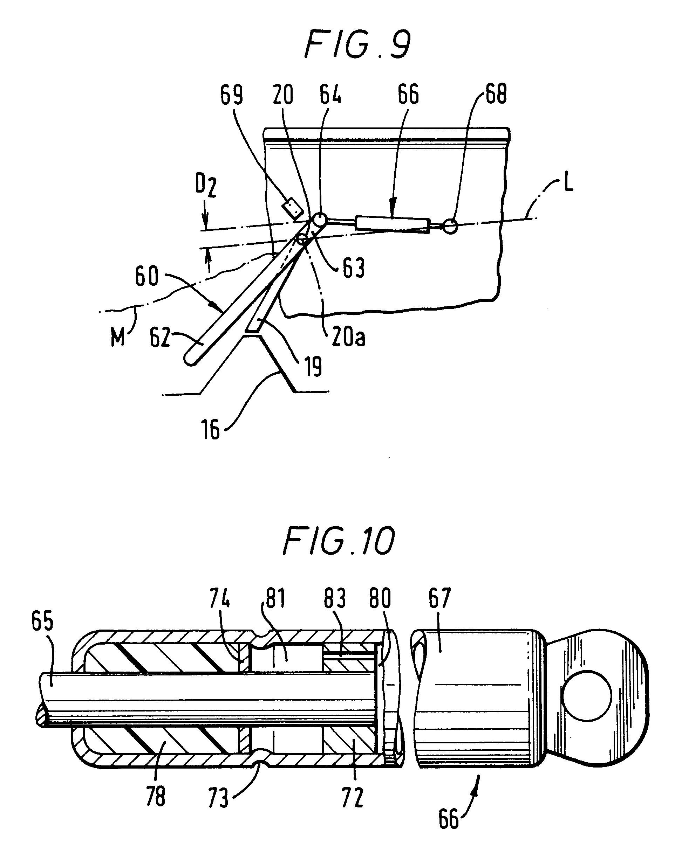

Fig.9 is a view similar to Fig.8 but showing the flap in its operative position and
Fig.10 is a cross-section through part of a gas spring used in the embodiment shown in Figs.7 to 9.

With reference to Figs.7 and 8, in which parts corresponding to parts in Figs.1 and 2 carry the same reference numerals, the flap 19 is secured to a shaft 20 which is pivotally mounted on the outer wall 10a and the inner wall 10b of the bowl 10. The shaft 20 extends outwardly beyond the wall 10a and is welded or otherwise secured to a lever 60. The lever 60 comprises an elongate handle section 62 and a second shorter section 63 extending on opposite sides of the shaft 20. Arcuate up and down movement of the handle 60 will move the flap 19 between its upper inoperative position and its lower operative position shown respectively in Figs. 8 and 9.

The section 63 is pivotally connected to a universal joint 64 at one end of a piston rod 65 of a nitrogen filled gas spring 66. Such gas springs are known per se and have been used hitherto in applications such as motor vehicle rear doors. The gas spring 66 has a cylinder 67 which is pivotally mounted on a universal joint 68 carried by the wall 10a of the bowl 10. As viewed in Fig.7, the section 63 and the gas spring 66 are arranged generally tangentially to the wall 10a at an angle to each other but handle section 62 is bent outwardly to provide ample room for a user to grasp the lever.

As seen in Fig.9, the lever 60 points downwardly when the flap 19 is in its operative position. In that position, the universal joint 64 lies above a notional mean line L which extends through axis 20a of shaft 20 and the universal joint 68 so as to define a dead centre position.

In order to move the flap into its inoperative position, the lever 60 is pivoted upwardly so that the universal joint 64 moved downwardly across the mean line L thereby compressing the nitrogen gas in the gas spring 66. Once the universal joint 64 moves beyond the notional mean line L, the gas spring will tend to assist movement of the lever 60 in a controlled manner towards its upper position corresponding to the Fig.8 inoperative position of the flap 19. A suitable stop member 69 is provided on the wall 10a for controlling upward movement of the handle 60. The stop 69 may be alternatively positioned to engage the flap 19.

In Fig.8 the distance D1 enables the gas spring 66 to provide a leverage sufficient to hold the lever 60 upwards and the flap 19 in its inoperative position. The gas spring 66 is always under compression so as to apply a continuous force to the universal joint 64 sufficient to ensure that the flap will be retained in its inoperative position even when the bowl 10 is subjected to vibration. A gas spring of around 600 to 900 Newtons may be suitable for the purpose illustrated and by suitably selecting the length of the second section 63 and hence distance D1, a desired leverage may be obtained to hold the flap in its inoperative position. For ease of operation, I prefer the length ratio between the sections 62, 63 of the lever to be around 5:1 and to use only around half the stroke of the gas spring during movement between the Figs.8 and 9 positions.

On moving the flap 19 to the Fig.9 position, the distance D2 is less than distance D1 as it is no longer necessary for the gas spring 66 to support the weight of the flap. In that case the lever 60 and flap 19 are maintained in the Fig. 9 position by a combination of their own weights, the weight and force of media M and leverage applied by the gas spring 66. In that way only a small amount of angular movement is necessary to shift the lever 60 upwardly to an overcentre position when moving the flap 19 towards its inoperative position. After that, upward movement of the lever 60 and flap 19 will be assisted by the gas spring 66. Thus minimal manual effort is required at the lever 60 when moving the flap 19 towards the inoperative position.

A diagrammatic cross-section through part of a gas spring 66 is shown in Fig. 10. The cylinder 67 houses a piston 72 which is suitably drivably connected to the piston rod 65. The cylinder 67 is deformed inwardly at 73 and a plate 74 is secured within the cylinder in abutment with the deformation. A seal 78 (shown diagrammatically) is positioned behind the plate 74.

The cylinder 67 defines two chambers 80, 81 one each side of the piston 72. The chambers 80, 81 are filled with nitrogen and a small amount of oil also occupies the chamber 81. The piston has a small bore 83 therein which acts as a flow control and permits controlled passage of nitrogen through the piston during movement of the piston in the cylinder.

Movement of the piston 72 to the right as viewed in Fig.10 causes the piston rod 65 to enter the cylinders and pressure therein rises, nitrogen in chamber 80 being permitted to move through bore 83 into chamber 81 to give a substantially flat rate characteristic. By removing the load from the piston rod 65, the pressure in chamber 80 on the right hand face of piston 72 will cause the piston to move back towards the Fig.10 position and nitrogen will pass through bore 83 to chamber 80 giving a controlled return movement. The controlled return movement prevents a fierce and sudden return of the piston rod 65. The oil in chamber 81 lubricates the internal parts and helps to provide a hydraulic cushion as the piston nears the Fig.10 position. A small amount of the oil may pass through the bore 83.

In certain cases it may be desirable for the piston rod 65 of the gas spring to point downwardly at all times. In such cases, the point at which the universal joint 68 is mounted on the bowl outer wall 10a will be higher than universal joint 64 at all times.

If desired the handle section 63 can be cranked for suitable positioning universal joint 64 as shown in broken lines in Fig.8.

As will be appreciated, the use of the gas spring avoids the disadvantages of the screw locking systems described earlier and it is no longer necessary to bend handles outwardly and then move the handle up or down to reposition the flap. The invention, therefore overcomes the problems of the earlier systems in a very simple manner and is highly advantageous in that respect. Also, a very simple up and down movement of the lever is required whereas even in the relatively simple arrangement shown in Figs. 5 and 6 a two plane movement of the handle is required i.e., outward and then up or down.

## Claims

1. Finishing apparatus of a vibratory type for workpieces comprising a container (10) defining a finishing chamber (11) for a mixture of workpieces (W) and finishing media (M), a pivotable member (19) for movement between an inoperative position and an operative position for directing the mixture from the chamber towards a surface (18) above a floor of the chamber, holding means (66) in the form of a cylinder for holding the pivotable member in at least its inoperative position and a lever (60) through which the holding means (66) is connected to the pivotable member, characterised in that an elongate handle (62) is provided by means of which the pivotable member (19) can be moved manually between its operative and inoperative positions, and said holding means is a gas spring (66) which comprises an enclosed pneumatic cylinder (67) charged with gas such as nitrogen under pressure, whereby manual movement of the handle (62) to change the position of the pivotal member (19) urges a piston rod (65) of the gas spring inwardly from an extended position to compress the gas spring (66), the gas spring thereafter providing through the lever (60) a controlled movement of the piston rod (65) back towards its extended position so as to assist movement of the pivotable member (19) towards its new position.

2. Finishing apparatus according to Claim 1 characterised in that the gas spring (66) is also arranged to hold the pivotable member (19) in its operative position.

3. Finishing apparatus according to Claim 1 or 2 characterised in that the gas spring (66) is arranged to provide a greater turning moment to the pivotable member (19) when the latter occupies its inoperative position than when it occupies its operative position.

4. Finishing apparatus according to Claim 1, 2 or 3 characterised in that during movement of the pivotable member (19) between its operative and inoperative positions, the gas spring (6) is preferably arranged to pass overcentre through a dead centre position.

5. Finishing apparatus according to Claim 4, characterised in that the gas spring (66) is mounted for pivoting on a first pivot (68) and is connected by a second pivot (64) to the lever (60) to which load is applied by the gas spring (66) during movement of the pivotable member (19) between its operative and inoperative positions.

6. Finishing apparatus according to Claim 4 or 5, characterised in that the dead centre position lies on a mean line (L) passing through the first pivot (68) and an axis (20a) about which the lever (60) rotates.

7. Finishing apparatus according to Claim 6 characterised in that in the operative position of the pivotable member (19) the second pivot (64) preferably lies at a different distance (D2) from the mean line (L) than when the pivotable member (19) occupies its operative position.

8. Finishing apparatus according to Claim 7 characterised in that the second pivot lies at a greater distance from the mean line when the pivotabie member occupies its inoperative position than when it occupies its operative position.

9. Finishing apparatus according to any of Claims 5 to 8 characterised in that the lever (60) comprises a section (63) to which load is applied by the gas spring (66) and a section (62) defining the handle, the said sections (63, 62) being arranged on opposite sides of an axis (20a) about which the lever rotates.

10. Finishing apparatus according to any preceding Claim characterised in that the container (10) is of circular or annular form and the gas spring (66) lies substantially tangentially to the container.

## Patentansprüche

1. Endbearbeitungsvorrichtung für Werkstücke, in der Form einer Schwingvorrichtung, mit einem Behälter (10), der eine Endbearbeitungskammer (11) für ein Gemisch aus Werkstrücken (W) und Endbearbeitungsmedien (M) bildet, einem schwenkbaren Glied (19) zur Bewegung zwischen einer Ruheposition und einer Betriebsposition, in der das Gemisch aus der Kammer in Richtung einer Oberfläche (18) oberhalb des Bodens der Kammer gerichtet wird. einer Halteeinrichtung (66) in der Form eines Zylinders zum Halten des schwenkbaren Gliedes wenigstens in seiner Ruheposition, und einem Hebel (60), durch den die Halteeinrichtung (66) mit dem schwenkbaren Glied verbunden ist, dadurch gekennzeichnet. daß ein langgestreckter Handgriff (62) vorgesehen ist, mit dessen Hilfe das schwenkbare Glied (19) manuell zwischen seiner Betriebsposition und seiner Ruheposition bewegt werden kann, welche Halteeinrichtung eine Gasfeder (66) ist, die einen geschlossenen pneumatischen Zylinder (67) umfaßt, der mit einem Gas, wie etwa Stickstoff, unter Druck, gefüllt ist, wobei die manuelle Bewegung des Handgriffs (62) zur Änderung der Position des schwenkbaren Gliedes (19) die Kolbenstange (65) der Gasfeder nach innen aus der ausgefahrenen Stellung drückt und die Gasfeder (66) zusammendrückt. wobei die Gasfeder anschließend über den Hebel (60) eine gesteuerte Bewegung der Kolbenstange (65) zurück in die ausgefahrene Position durchführt, so daß sie die Bewegung des schwenkbaren Gliedes (19) in Richtung seiner neuen Position unterstützt.

2. Endbearbeitungsvorrichtung nach Anspruch 1, dadurch gekennzeichnet, daß die Gasfeder (66) auch so angeordnet ist, daß sie das schwenkbare Glied (19) in seiner Betriebsposition hält.

3. Endbearbeitungsvorrichtung nach Anspruch 1 oder 2, dadurch gekennzeichnet, daß die Gasfeder (66) so angeordnet ist, daß sie dem schwenkbaren Glied (19) ein größeres Schwenkmoment verleiht, wenn das schwenkbare Glied die Ruheposition einnimmt, als es in der Betriebsposition der Fall ist.

4. Endbearbeitungsvorrichtung nach Anspruch 1, 2 oder 3, dadurch gekennzeichnet, daß während der Bewegung des schwenkbaren Gliedes (19) zwischen der Betriebsposition und der Ruheposition die Gasfeder (6) vorzugsweise so angeordnet ist, daß sie über eine Totpunktstellung hinweggeht.

5. Endbearbeitungsvorrichtung nach Anspruch 4, dadurch gekennzeichnet. daß die Gasfeder (66) schwenkbar auf einem ersten Gelenk (68) angebracht und über ein zweites Gelenk (64) mit dem Hebel (60) verbunden ist, auf den Last durch die Gasfeder (66) während der Bewegung des schwenkbaren Gliedes (19) zwischen der Betriebsstellung und der Ruhestellung ausgeübt wird.

6. Endbearbeitungsvorrichtung nach Anspruch 4 oder 5, dadurch gekennzeichnet, daß die Totpunktstellung auf einer mittleren Linie (L) liegt, die durch das erste Gelenk (68) und eine Achse (20a) verläuft, um die der Hebel (60) drehbar ist.

7. Endbearbeitungsvorrichtung nach Anspruch 6, dadurch gekennzeichnet. daß in der Betriebsposition des schwenkbaren Gliedes (19) das zweite Gelenk (64) vorzugsweise in einem unterschiedlichen Abstand (D2) von der Mittellinie (L) liegt, als wenn das schwenkbare Glied (19) die Ruheposition einnimmt.

8. Endbearbeitungsvorrichtung nach Anspruch 7, dadurch gekennzeichnet, daß das zweite Gelenk in einem größeren Abstand von der Mittellinie liegt, wenn das schwenkbare Glied die Ruheposition einnimmt, als wenn es die Betriebsposition einnimmt.

9. Endbearbeitungsvorrichtung nach einem der Ansprüche 5 bis 8, dadurch gekennzeichnet, daß der Hebel (60) einen Abschnitt (63) aufweist, der durch die Gasfeder (26) belastet wird, und einen Abschnitt (62) der den Handgriff bildet, und daß die Abschnitte (63, 62) auf gegenüberliegenden Seiten einer Achse (20a) angeordnet sind, um die der Hebel schwenkbar ist.

10. Endbearbeitungsvorrichtung nach einem der vorhergehenden Ansprüche, dadurch gekennzeichnet, daß der Behälter (10) kreis- oder ringförmig ist und daß die Gasfeder (66) im wesentlichen tangential zum Behälter liegt.

## Revendications

1. Dispositif de finition de type vibrant pour pièces usinées comprenant une enceinte (10) formant une chambre de finition (11) pour un mélange de pièces usinées (W) et d'agents de finition (M), un organe pivotant (19) se déplaçant entre une position non-opérante et une position opérante pour l'acheminement du mélange depuis la chambre vers une surface (18) s'étendant au-dessus d'un fond de la chambre, un moyen de maintien (66) sous la forme d'un cylindre pour le maintien de l'organe pivotant au moins dans sa position non-opérante et un levier (60) à l'aide duquel le moyen de maintien (66) est relié à l'organe pivotant, caractérisé en ce que l'on prévoit une poignée allongée (62) au moyen de laquelle l'organe pivotant (19) peut être déplacé manuellement entre ses positions non-opérante et opérante, et en ce que ledit moyen de maintien est un ressort à gaz (66) comprenant un cylindre pneumatique intérieur (67) chargé de gaz tel que de l'azote sous pression, l'actionnement manuel de la poignée (62) pour modifier la position de l'organe de pivotement (19) poussant une tige de piston (65) du ressort à gaz vers l'intérieur depuis une position sortie pour comprimer le ressort à gaz (66), le ressort à gaz provoquant ensuite, par l'intermédiaire du levier (60), un déplacement contrôlé de la tige de piston (65) en arrière vers sa position d'extension, de façon à assister le déplacement de l'organe pivotant (19) vers sa nouvelle position.

2. Dispositif de finition selon la revendication 1, caractérisé en ce que le ressort à gaz (66) est également prévu pour maintenir l'organe pivotant (19) dans sa position opérante.

3. Dispositif de finition selon l'une des revendications 1 ou 2, caractérisé en ce que le ressort à gaz (16) est prévu pour fournir un moment de couple plus élevé à l'organe pivotant (19) lorsque celui-ci occupe sa position non-opérante que lorsqu'il occupe sa position opérante.

4. Dispositif de finition selon l'une des revendications 1, 2 ou 3, caractérisé en ce que le ressort à gaz (6) est préférentiellement agencé de façon à dépasser de manière brusque une position de point mort pendant le déplacement de l'organe pivotant (19) entre ses positions opérante et non-opérante.

5. Dispositif de finition selon la revendication 4, caractérisé en ce que le ressort à gaz (66) est monté à pivotement sur un premier pivot (68) et est relié par un second pivot (64) au levier (60) sur lequel le ressort à gaz (66) exerce un effort pendant le déplacement de l'organe pivotant (19) entre ses positions opérante et non-opérante.

6. Dispositif de finition selon l'une des revendications 4 ou 5, caractérisé en ce que la position de point mort s'étend le long d'une ligne moyenne (L) passant par le premier pivot (68) et un axe (20a) autour duquel le levier (60) pivote.

7. Dispositif de finition selon la revendication 6, caractérisé en ce que le second pivot (6) s'étend préférentiellement à une distance (D2) de la ligne moyenne (L) différente selon que l'organe pivotant (19) se trouve en position opérante ou non-opérante.

8. Dispositif de finition selon la revendication 7, caractérisé en ce que lorsque l'organe pivotant occupe sa position non-opérante, le second pivot s'étend à une distance supérieure de la ligne moyenne que lorsque l'organe pivotant occupe sa position opérante.

9. Dispositif de finition selon l'une quelconque des revendications 5 à 8, caractérisé en ce que le levier (60) présente un tronçon (63) sur lequel le ressort à gaz (66) exerce un effort et un tronçon (62) formant la poignée, lesdits tronçons (63,62) étant disposés aux extrémités opposées d'un axe (20a) autour duquel le levier pivote.

10. Dispositif de finition selon l'une quelconque des revendications précédentes, caractérisé en ce que l'enceinte (10) est de forme circulaire ou annulaire et en ce que le ressort à gaz (66) s'étend sensiblement tangentiellement à l'enceinte.
